# EUROPEAN PATENT APPLICATION

(11) **EP 4 386 885 A1**
(43) Date of publication of application: **19.06.2024**
(21) Application number: 23820138.8
(22) Date of filing: 09.06.2023
(51) Int. Cl.: H01M 4/13, H01M 10/0585, H01M 10/052, H01M 10/0562

(54) **ELECTRODE COMPOSITE FILM, AND ELECTROCHEMICAL DEVICE INCLUDING SAME**

(30) Priority: 10.06.2022 KR 20220071071
(71) Applicant: LG Energy Solution, Ltd., Seoul 07335 (KR)
(72) Inventor: LEE, Jae-Gil, Daejeon 34122 (KR); KIM, Ji-Young, Daejeon 34122 (KR); JANG, Dae-Sung, Daejeon 34122 (KR); HWANG, Sun-Woo, Daejeon 34122 (KR)
(74) Representative: Goddar, Heinz J.
(86) International application number: PCT/KR2023/007952
(87) International publication number: WO 2023/239203

(57) **Abstract**

The present disclosure relates to an electrode composite membrane and an electrochemical device including the same. The electrode composite membrane includes: an electrode plate having an electrode portion and a reinforcing material portion; an electrolyte membrane disposed on one surface of the electrode plate; a support disposed on the other surface of the electrode plate; and an adhesive portion disposed at least partially at the portion where the electrode plate faces the support, wherein the electrode portion includes a current collector and an active material layer disposed on at least one surface of the current collector, the electrolyte membrane is in close contact with the electrode portion and the reinforcing material portion with no spacing, while being in contact with at least a part of the active material layer, and the reinforcing material portion has a thickness equal to or smaller than the thickness of the electrode portion, is disposed in such a manner that it may totally or at least partially surround the perimeter of the lateral side of the electrode portion and is in contact with the lateral side of the electrode portion with no spacing.

## Description

### TECHNICAL FIELD

The present disclosure relates to an electrode composite membrane and an electrochemical device including the same.

The present application claims priority to Korean Patent Application No. 10-2022-0071071 filed on June 10, 2022 in the Republic of Korea, the disclosures of which are incorporated herein by reference.

### BACKGROUND ART

Due to a rapid increase in use of fossil fuel, there has been an increasing need for use of substitute energy and clean energy. The most actively studied field as a part of attempts to meet such a need is the field of power generation and power storage using electrochemistry.

Secondary batteries have been used widely as power sources for portable electronic instruments. A lithium secondary battery as a representative of such secondary batteries has been used not only as an energy source of mobile instruments but also as a power source of electric vehicles and hybrid electric vehicles capable of substituting for vehicles, such as gasoline vehicles and diesel vehicles, using fossil fuel and regarded as one of the main causes of air pollution, recently. In addition, application of such a lithium secondary battery has been extended even to a supplementary power source of electric power through the formation into a grid.

Such a lithium secondary battery has a relatively simple structure, and the three main elements, i.e. a negative electrode, a positive electrode and an electrolyte, of the lithium secondary battery correspond to constitutional elements subjected to active research and development. The lithium secondary battery is operated through the conduction of lithium ions from the positive electrode to the negative electrode and from the negative electrode to the positive electrode. Herein, the electrolyte functions as a conduction medium. In the widely used lithium secondary batteries, an electrolyte solution including a lithium salt dissolved in an aprotic organic solvent is used. However, such an electrolyte solution has a problem during use due to the electrolyte leakage or gas generation. Therefore, there is a need for developing solid-state batteries in order to solve the above-mentioned problem.

Meanwhile, a process of manufacturing such a lithium secondary battery may be divided into the three steps of an electrode-forming step, an electrode assembly-forming step and an aging step. Herein, the electrode-forming step for manufacturing a solid-state battery includes a sub-step of pressurizing a finished electrode and electrolyte membrane. Herein, a phenomenon in which the electrode and the electrolyte membrane are separated at the edge portion occurs frequently. In this case, a short-circuit between both electrodes may occur in the subsequent electrode assembly-forming step to cause a drop in production yield, and the performance of a battery using the resultant electrode composite membrane may be degraded undesirably.

### DISCLOSURE

### Technical Problem

The present disclosure is designed to solve the problems of the related art, and therefore the present disclosure is directed to providing an electrode composite membrane which is an electrolyte membrane-electrode composite for use in a solid-state battery and shows excellent adhesion between the electrode and the electrolyte membrane.

Particularly, the present disclosure is directed to providing an electrode composite membrane showing improvement in terms of the separation phenomenon at the edge portion upon the pressurization of the electrode and the electrolyte membrane.

### Technical Solution

In one aspect of the present disclosure, there is provided an electrode composite membrane according to any one of the following embodiments.

According to the first embodiment of the present disclosure, there is provided an electrode composite membrane including: an electrode plate having an electrode portion and a reinforcing material portion; an electrolyte membrane disposed on one surface of the electrode plate; a support disposed on the other surface of the electrode plate; and an adhesive portion disposed at least partially at the portion where the electrode plate faces the support, wherein the electrode portion includes a current collector and an active material layer disposed on at least one surface of the current collector, the electrolyte membrane is in close contact with the electrode portion and the reinforcing material portion with no spacing, while being in contact with at least a part of the active material layer, and the reinforcing material portion has a thickness equal to or smaller than the thickness of the electrode portion, is disposed in such a manner that it may totally or at least partially surround the perimeter of the lateral side of the electrode portion and is in contact with the lateral side of the electrode portion with no spacing.

According to the second embodiment of the present disclosure, there is provided the electrode composite membrane as defined in the first embodiment, wherein the electrolyte membrane is disposed in such a manner that it may totally cover one surface of the electrode plate.

According to the third embodiment of the present disclosure, there is provided the electrode composite membrane as defined in the first or the second embodiment, wherein the reinforcing material portion has a thickness smaller than the thickness of the electrode portion and is disposed in such a manner that it may totally surround the perimeter of the lateral side of the electrode portion.

According to the fourth embodiment of the present disclosure, there is provided the electrode composite membrane as defined in any one of the first to the third embodiments, wherein the reinforcing material portion is disposed in such a manner that it has a predetermined interval in the perimeter of the lateral side of the electrode portion and may surround only a part of the perimeter of the lateral side of the electrode portion, and the perimeter in which the reinforcing material portion is disposed corresponds to 50% or more based on the total perimeter of the lateral side of the electrode portion.

According to the fifth embodiment of the present disclosure, there is provided the electrode composite membrane as defined in any one of the first to the fourth embodiments, wherein the support is disposed in such a manner that it may totally cover one surface of the electrode plate.

According to the sixth embodiment of the present disclosure, there is provided the electrode composite membrane as defined in any one of the first to the fifth embodiments, wherein the adhesive portion is disposed totally at the portion where the electrode plate faces the support.

According to the seventh embodiment of the present disclosure, there is provided the electrode composite membrane as defined in any one of the first to the sixth embodiments, wherein the reinforcing material portion includes a polyolefin-based polymer.

According to the eighth embodiment of the present disclosure, there is provided the electrode composite membrane as defined in any one of the first to the seventh embodiments, wherein the adhesive portion includes a fluorine-based polymer, an acryl-based polymer, a urethane-based polymer, an epoxy-based polymer, an imide-based polymer, or a mixture of two or more of them.

According to the ninth embodiment of the present disclosure, there is provided the electrode composite membrane as defined in any one of the first to the eighth embodiments, wherein the electrolyte membrane is a film-shaped electrolyte membrane including a solid electrolyte.

In another aspect of the present disclosure, there is provided an electrochemical device according to any one of the following embodiments.

According to the tenth embodiment of the present disclosure, there is provided an electrochemical device including: an electrode assembly including a positive electrode and a negative electrode; and a casing configured to receive the electrode assembly, wherein at least one of the positive electrode and the negative electrode is the electrode composite membrane as defined in any one of the first to the ninth embodiments.

According to the eleventh embodiment, there is provided the electrochemical device as defined in the tenth embodiment, which is a lithium secondary battery.

According to the twelfth embodiment, there is provided the electrochemical device as defined in the tenth or the eleventh embodiment, which is a solid-state battery.

### Advantageous Effects

The electrode composite membrane according to an embodiment of the present disclosure shows improvement in terms of an electrode curling phenomenon after pressurizing an electrode and electrolyte membrane, and thus provides improved adhesion between the electrode and the electrolyte membrane.

Therefore, when manufacturing a battery by using the electrode composite membrane, it is possible to prevent a short-circuit and to improve the battery production yield.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a layout drawing of each constitutional element of the electrode composite membrane 1 according to an embodiment of the present disclosure.
FIG. 2 is a top view of the electrode plate 10 according to an embodiment of the present disclosure.
FIG. 2b and FIG. 2c each illustrate a perspective view of the electrode plate 10 according to an embodiment of the present disclosure.
FIG. 3a is a top view of the electrode plate 10 according to an embodiment of the present disclosure.
FIG. 3b and FIG. 3c each illustrate a perspective view of the electrode plate 10 according to an embodiment of the present disclosure.
FIG. 4a is a top view of the electrode plate 10 according to an embodiment of the present disclosure.
FIG. 4b and FIG. 4c each illustrate a perspective view of the electrode plate 10 according to an embodiment of the present disclosure.
FIG. 5a and FIG. 5b each illustrate a layout drawing of the support 30 and the adhesive portion 40 according to an embodiment of the present disclosure.
FIG. 6 is a photographic image illustrating the appearance of the electrode composite membrane according to Example 1 described herein.
FIG. 7 is a photographic image illustrating the appearance of the electrode composite membrane according to Comparative Example 1 described herein.
FIG. 8 is a photographic image illustrating the appearance of the electrode composite membrane according to Comparative Example 3 described herein.

### BEST MODE

Hereinafter, preferred embodiments of the present disclosure will be described in detail. However, the description proposed herein is just a preferable example for the purpose of illustrations only, not intended to limit the scope of the disclosure, and each constitutional element may be modified diversely or may be combined optionally. Therefore, it should be understood that other equivalents and modifications could be made thereto without departing from the scope of the disclosure.

Throughout the specification, the expression `a part includes an element' does not preclude the presence of any additional elements but means that the part may further include the other elements.

As used herein, the expression `A and/or B' means `A, B or both of them'.

Specific terms used in the following description are for illustrative purposes and are not limiting. The term, such as 'top', 'bottom', 'left', 'right', 'front', 'rear', 'internal' or 'external' showing a direction indicates the direction in the drawings to which it is referred, or indicates the direction toward the geometrical center of the corresponding apparatus, system and members thereof, or the direction away from the same.

In one aspect of the present disclosure, there is provided an electrode composite membrane.

As used herein, the electrode composite membrane refers to a composite of an electrolyte membrane with an electrode and includes: an electrolyte membrane; and an electrode formed on one surface of the electrolyte membrane.

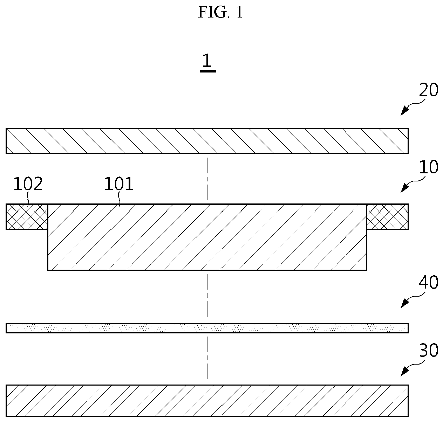

FIG. 1 is a layout drawing of each constitutional element of the electrode composite membrane 1 according to an embodiment of the present disclosure.

The electrode composite membrane 1 according to an embodiment of the present disclosure includes: an electrode plate 10 having an electrode portion 101 and a reinforcing material portion 102; an electrolyte membrane 20 disposed on one surface of the electrode plate 10; a support 30 disposed on the other surface of the electrode plate; and an adhesive portion 40 disposed at least partially at the portion where the electrode plate faces the support, wherein the electrode portion includes a current collector and an active material layer disposed on at least one surface of the current collector, the electrolyte membrane is in close contact with the electrode portion and the reinforcing material portion with no spacing, while being in contact with at least a part of the active material layer, and the reinforcing material portion has a thickness equal to or smaller than the thickness of the electrode portion, is disposed in such a manner that it may totally or at least partially surround the perimeter of the lateral side of the electrode portion and is in contact with the lateral side of the electrode portion with no spacing.

Unless otherwise stated, the direction in which each of the constitutional elements of the electrode composite membrane is stacked is referred to as the longitudinal direction (top, bottom), and the direction (left, right) transverse to the longitudinal direction is referred to as the lateral direction.

As used herein, for convenience, one surface of the electrode plate is referred to as the first surface, and the surface opposite to the first surface is referred to as the second surface. Herein, the first surface of the electrode plate is referred to as the surface facing the electrolyte membrane, and the second surface of the electrode plate is referred to as the surface facing the support.

According to an embodiment of the present disclosure, the electrode composite membrane 1 includes a reinforcing material portion 102 disposed in such a manner that it may at least partially surround the perimeter of the lateral side of the electrode portion 101. In this manner, it is possible to improve the problems occurring in the conventional process for manufacturing a solid-state battery due to the degradation of the adhesion at the external end of the portion where the electrode plate faces the electrolyte membrane as compared to the center of the portion upon the lamination and pressing of the electrode plate and the electrolyte membrane, resulting in a curling phenomenon of the electrode plate.

Particularly, the electrode composite membrane 1 is provided with a support 30 on the surface opposite to the surface where the electrode plate 10 faces the electrolyte membrane 20 in order to minimize the deformation of the electrode plate 10 caused by the pressure upon the pressing. In addition, an adhesive portion 40 is provided between the electrode plate 10 and the support 30 in order to improve the adhesion therebetween.

According to the present disclosure, the electrode plate includes a current collector and an active material layer disposed on the current collector, and the electrolyte membrane is disposed on the surface of the active material layer. The electrolyte membrane is disposed in such a manner that it may be in close contact with both of the electrode portion and the reinforcing material portion with no spacing.

According to an embodiment of the present disclosure, in order to prevent direct contact between the electrodes having opposite polarities upon the assemblage of a battery using the electrode composite membrane, the area of one surface of the electrode portion 101 may be preferably smaller than the area of one surface of the electrolyte membrane at the portion where the electrode plate 10 faces the electrolyte membrane 20. Particularly, it is preferred that the electrolyte membrane 20 is disposed in such a manner that it may totally cover the surface of the active material layer.

According to an embodiment of the present disclosure, when the area of one surface of the electrode portion 101 is smaller than the area of one surface of the electrode membrane as mentioned above (i.e. when the electrode membrane cannot totally cover the surface of the active material layer of the electrode portion), it is preferred that the area of one surface of the electrolyte membrane 20 is disposed in such a manner that it may totally cover the area of one surface of the electrode plate 10 in order to prevent the curling of the electrode plate 10 and/or the electrolyte membrane 20. To allow the area of one surface of the electrolyte membrane to totally cover the area of one surface of the electrode plate, the area of one surface of the electrolyte membrane may be equal to the area of one surface of the electrode plate, or the area of one surface of the electrolyte membrane may be larger than the area of one surface of the electrode plate.

According to another embodiment of the present disclosure, it is preferred that the area of one surface of the electrolyte membrane 20 may be larger than the area of one surface of the electrode portion 101 so that the surface of the active material layer of the electrode portion may be totally covered with the electrolyte membrane.

According to an embodiment of the present disclosure, as mentioned above, not only one surface of the electrode portion 101 but also one surface of the electrode plate 20 may be totally covered with the electrolyte membrane, the reinforcing material portion 102 may be disposed in such a manner that it may totally surround the perimeter of the lateral side of the electrode portion 101, and the reinforcing material portion may be in contact with the lateral side of the electrode portion with no spacing.

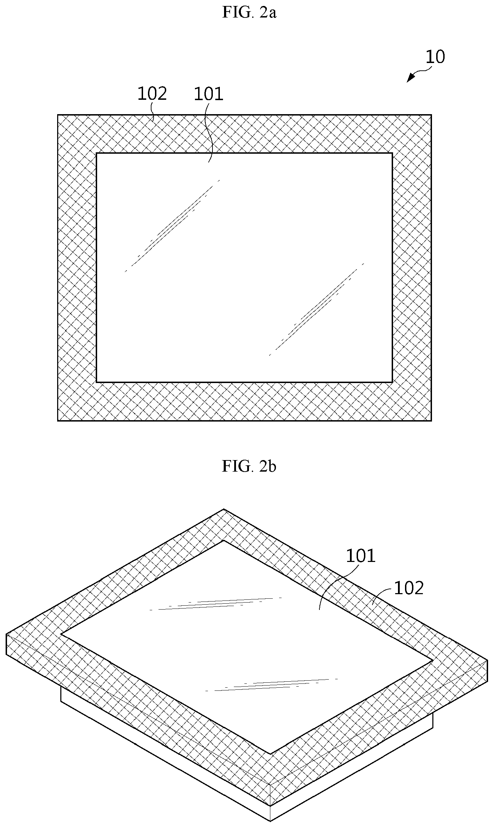

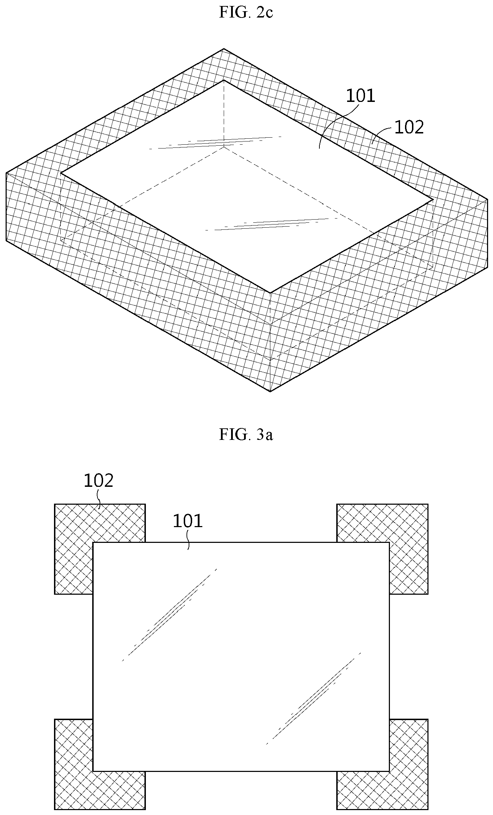

FIG. 2a is a top view of the electrode plate 10 according to an embodiment of the present disclosure. Referring to FIG. 2a, the reinforcing material portion 102 is disposed in such a manner that it may totally surround the perimeter of the lateral side of the electrode portion 101 and is in contact with the lateral side of the electrode portion with no spacing. Herein, the shape of the outer circumferential surface of the reinforcing material portion 102 is not limited to the quadrangular shape as shown in FIG. 2 but may be the same as the shape of the electrolyte membrane (not shown) that is in contact with the electrode plate 10.

According to the present disclosure, the reinforcing material portion 102 may have a thickness equal to or smaller than the thickness of the electrode portion 101. This is intended to prevent the problem of degradation of the adhesion between the electrode plate and the electrolyte membrane upon the pressing of the electrode plate and the electrolyte membrane, the problem occurring when the thickness of the reinforcing material portion is larger than the thickness of the electrode portion.

Referring to FIG. 2b, when the reinforcing material portion is disposed in such a manner that it may totally surround the perimeter of the lateral side of the electrode portion and is in contact with the lateral side of the electrode portion with no spacing, the thickness of the reinforcing material portion may be smaller than the thickness of the electrode portion. This may be a preferred embodiment when the electrode portion shows a large difference in thickness before and after pressing, but the scope of the present disclosure is not limited thereto.

Referring to FIG. 2c, when the reinforcing material portion is disposed in such a manner that it may totally surround the perimeter of the lateral side of the electrode portion and is in contact with the lateral side of the electrode portion with no spacing, the thickness of the electrode portion may be equal to the thickness of the reinforcing material portion. This may be a preferred embodiment when the electrode portion shows no difference or a small difference in thickness before and after pressing, contrary to the above-mentioned embodiment, and is favorable to improvement of the adhesion to the support disposed at the bottom of the electrode plate 10. However, the scope of the present disclosure is not limited thereto.

According to an embodiment of the present disclosure, the embodiment in which the thickness of the reinforcing material portion is smaller than the thickness of the electrode portion so that the reinforcing material portion may not be in contact with the current collector is more preferred in terms of the improvement of the electrochemical performance of a battery.

According to an embodiment of the present disclosure, the thickness of the reinforcing material portion may be equal to or smaller than the thickness of the electrode portion as described above. For example, the thickness of the reinforcing material portion may be 10-100%, particularly 50-100% or 80-100%, based on the total thickness of the electrode portion. When the thickness of the reinforcing material portion satisfies the above-defined range, it is possible to realize an excellent effect in terms of the adhesion after pressing of the electrode plate and the electrolyte membrane, but the scope of the present disclosure is not limited thereto.

According to an embodiment of the present disclosure, the reinforcing material portion 102 may be disposed in such a manner that it may partially surround the perimeter of the lateral side of the electrode portion 101 and may be in contact with the lateral side of the electrode plate with no spacing.

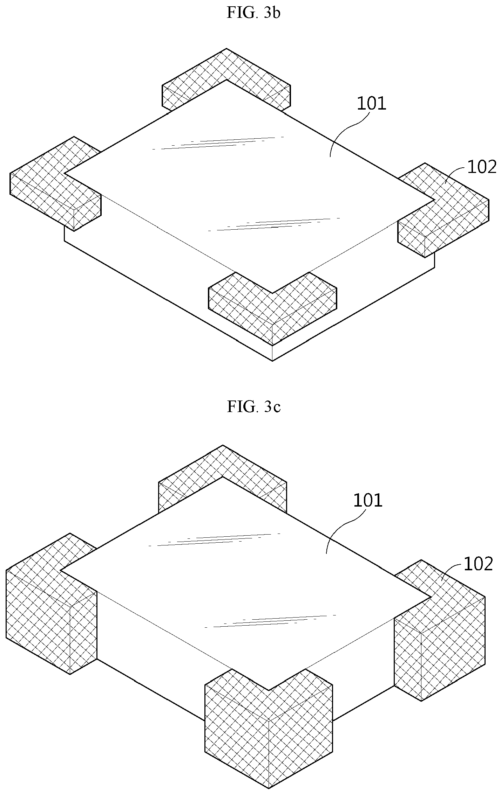

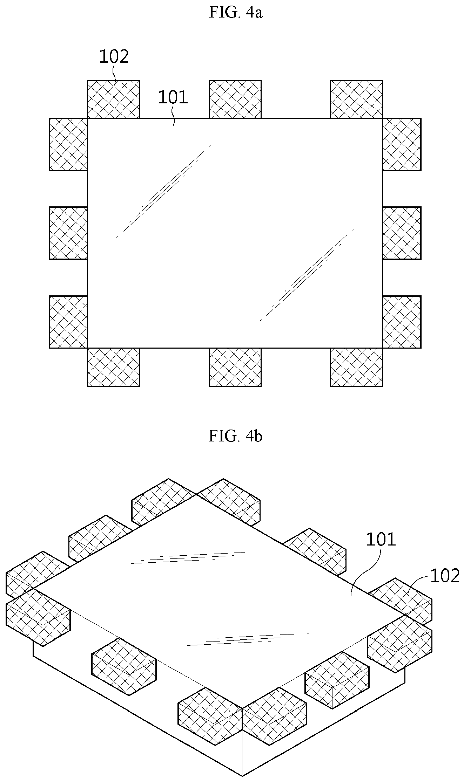

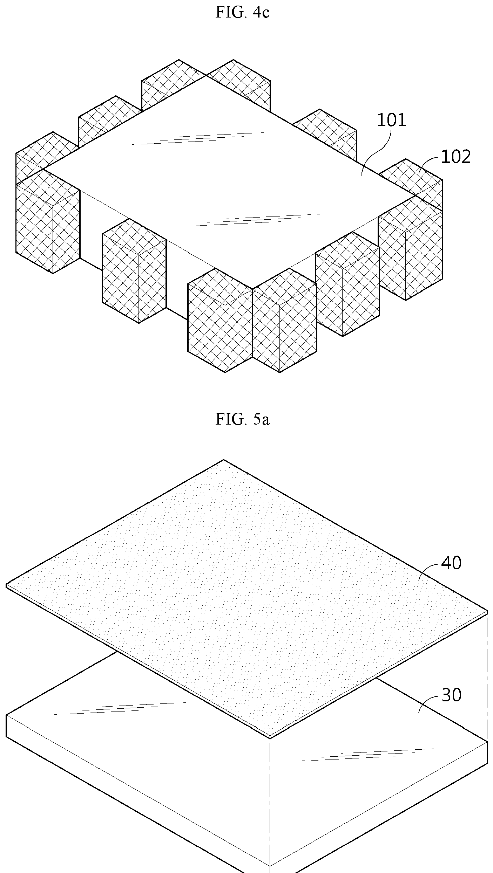

Each of FIG. 3a and FIG. 4a is a top view of the electrode plate 10 according to an embodiment of the present disclosure, and each of FIG. 3b, FIG. 3c, FIG. 4b and FIG. 4c is a perspective view of the electrode plate 10 according to an embodiment of the present disclosure.

Referring to FIG. 3a, the reinforcing material portion 102 may be disposed in such a manner that it may surround merely the lateral sides of the four corners. In addition, referring to FIG. 4a, the reinforcing material portion 102 may be disposed in such a manner that it may have a predetermined interval in the perimeter of the lateral side of the electrode portion and may surround only a part of the perimeter of the lateral side of the electrode portion.

Herein, referring to FIG. 3b and FIG. 4b, when the reinforcing material portion is disposed in such a manner that it may surround only a part of the perimeter of the lateral side of the electrode portion and is in contact with the lateral side of the electrode portion with no spacing, the thickness of the reinforcing material portion may be smaller than the thickness of the electrode portion.

In addition, referring to FIG. 3c and FIG. 4c, when the reinforcing material portion is disposed in such a manner that it may surround only a part of the perimeter of the lateral side of the electrode portion and is in contact with the lateral side of the electrode portion with no spacing, the thickness of the reinforcing material portion may be equal to the thickness of the electrode portion.

According to an embodiment of the present disclosure, when the reinforcing material portion is disposed in such a manner that it may surround only a part of the perimeter of the lateral side of the electrode portion, the perimeter in which the reinforcing material portion is disposed may corresponds to 50% or more, particularly 60% or more, 70% or more, or 80% or more, based on the total perimeter of the lateral side of the electrode portion, but the scope of the present disclosure is not limited thereto.

As described above, the electrode composite membrane 1 is provide with a support 30 on the second surface of the electrode plate 10 in order to minimize the deformation of the electrode plate caused by the pressure upon the pressing for the adhesion between the electrode plate and the electrolyte membrane.

According to an embodiment of the present disclosure, it is preferred that the area of one surface of the support is larger than the area of one surface of the electrode portion 101 so that the electrode portion may be totally supported. Particularly, the support may be disposed preferably in such a manner that the support may totally cover one surface of the current collector of the electrode portion.

In addition, it is preferred that the area of the support may be equal to or larger than the area of the electrode plate so that the support may totally support the second surface of the electrode plate. Particularly, the support may be disposed preferably in such a manner that it may totally cover the second surface of the electrode plate.

In addition, the electrode composite membrane is provided with an adhesive portion 40 between the electrode plate 10 and the support 30 in order to improve the adhesion between the support and the electrode plate.

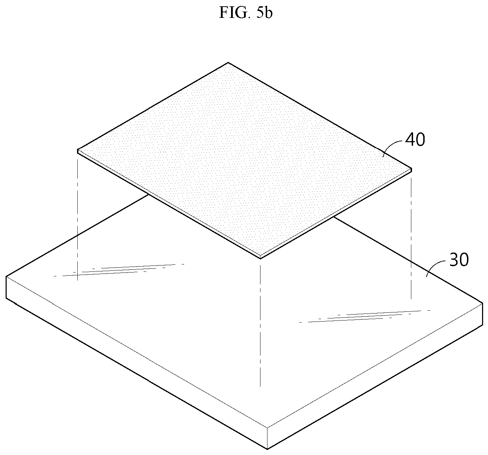

Each of FIG. 5a and FIG. 5b is a layout drawing of the support 30 and the adhesion portion 40 according to an embodiment of the present disclosure.

Referring to FIG. 5a, the adhesive portion 40 may be disposed in such a manner that it may totally cover the surface of the support 30.

FIG. 5b illustrates another embodiment of the layout of the adhesive portion. Referring to FIG. 5b, the adhesive portion 40 may be disposed partially in the support 30.

Herein, the adhesive portion may be disposed at least partially, preferably totally, at the portion where the support faces the electrode portion for the purpose of uniform strength between the electrode portion and the support.

According to an embodiment of the present disclosure, any material may be used for the reinforcing material portion with no particular limitation, as long as it causes little or no electrochemical reaction with the electrode active material and/or electrolyte ingredient in the electrode portion and thus causes no degradation of the performance of a battery.

According to an embodiment of the present disclosure, the material of the reinforcing material potion may include a polyolefin-based polymer, but the scope of the present disclosure is not limited thereto.

Particular examples of the polyolefin-based polymer may include: polyethylene; polypropylene; polybutylene; polypentene; polyhexene; polyoctene; a copolymer of at least two of ethylene, propylene, butene, pentene, 4-methylpentene, hexene, heptene and octene; or a mixture thereof. However, the scope of the present disclosure is not limited thereto.

According to an embodiment of the present disclosure, the reinforcing material may include polyethylene, polypropylene or a mixture thereof.

According to an embodiment of the present disclosure, non-limiting examples of the material of the support may include a polyolefin-based polymer, a cellulose-based nonwoven web or a mixture thereof.

Reference will be made to the above description of the reinforcing material portion about the polyolefin-based polymer. According to an embodiment of the present disclosure, the material of the support may be the same as or different from the material of the reinforcing material portion with no particular limitation.

The cellulose-based nonwoven web refers to a porous sheet including cellulose fibers, and any known type cellulose-based nonwoven web may be used with no particular limitation.

According to an embodiment of the present disclosure, any material may be used for the adhesive portion with no particular limitation, as long as it is adhesive to both the support and the electrode plate.

According to an embodiment of the present disclosure, non-limiting examples of the material of the adhesive portion may include a fluorine-based polymer, an acryl-based polymer, a urethane-based polymer, an epoxy-based polymer, an imide-based polymer, or a mixture of two or more of them, but the scope of the present disclosure is not limited thereto.

Particular examples of the fluorine-based polymer include, but are not limited to: vinylidene fluoride homopolymer obtained by polymerization of vinylidene fluoride monomer alone; copolymer of vinylidene fluoride monomer with at least one comonomer selected from trifluoroethylene (TrFE), tetrafluoroethylene (TFE), hexafluoropropylene (HFP), trichloroethylene (TrCE), trichlorofluoroethylene (TCFE), chlorotrifluoroethylene (CTFE), polymethyl methacrylate (PMMA) and polyvinyl acetate (PVAc); or two or more of them.

For example, the acryl-based polymer may include acryl-based homopolymer obtained by the polymerization of acryl-based monomer alone or copolymer of acryl-based monomer with another monomer. Particular examples of the acryl-based polymer may include, but are not limited to: poly(methyl methacrylate), poly(ethylhexyl acrylate), poly(butyl acrylate), poly(acrylonitrile), copolymer of ethylhexyl acrylate with methyl methacrylate, copolymer of butyl acrylate with methyl methacrylate, ethyl acrylate-acrylic acid-N,N-dimethyl acrylamide copolymer, ethyl acrylate-acrylic acid-2-(dimethylamino)ethyl acrylate copolymer, ethyl acrylate-acrylic acid-N,N-diethylacrylamide copolymer, ethyl acrylate-acrylic acid-2-(diethylamino)ethyl acrylate copolymer, or two or more of them.

For example, the urethane-based polymer may include polyurethane obtained by the polymerization of urethane monomer alone, copolymer of urethane monomer with acryl-based monomer, or two or more of them, but is not limited thereto. Particular examples of the copolymer of urethane monomer with acryl-based monomer may include those synthesized from an intermediate structure selected from polyester polyol, polyether polyol, polycarbonate polyol, polycaprolactone polyol, tetrahydrofuran-propylene oxide ringopening copolymer, polybutadiene diol, polydimethylsiloxanediol, ethylene glycol, propylene glycol, 1,4-butanediol, 1,5-pentanediol, 1,6-hexanediol, neopentyl glycol, 1,4-cyclohexanedimethanol, bisphenol A, hydrogenated bisphenol A, 2,4-toluene diisocyanate, 1,3-xylene diisocyanate, 1,4-xylene diisocyanate, 1,5-naphthalene diisocyanate, 1,6-hexane diisocyanate, isophorone diisocyanate, bisphenol A propylene oxide-modified diacrylate, or the like.

For example, the epoxy-based polymer may include, but are not limited to: polyepoxy obtained from the polymerization of epoxy monomer alone, copolymer of epoxy monomer with an acryl-based monomer, or two or more of them. Particular examples of the copolymer of epoxy monomer with acryl-based monomer may include those synthesized from an intermediate structure having a backbone selected from 2-bromohydroquinone, resorcinol, catechol, bisphenol, such as bisphenol A, bisphenol F, bisphenol AD or bisphenol S, 4,4'-dihydroxybiphenyl, bis(4-hydroxyphenyl)ether, or the like, and those selected from (meth)acrylate oligomer groups having an alkyl group, an aryl group, a methylol group, an allyl group, a cycloaliphatic group, halogen (tetrabromobisphenol A, etc.), a nitro group, or the like.

For example, the imide-based polymer may include polyimide, or the like.

According to an embodiment of the present disclosure, the adhesive portion may be formed by coating a slurry for forming an adhesive portion, including any one of the above-mentioned polymers on one surface of the support, followed by drying, but the scope of the present disclosure is not limited thereto. The coating and drying of the slurry may be carried out by any known means with no particular limitation.

According to an embodiment of the present disclosure, the electrolyte membrane is not particularly limited, as long as it may be used for a solid-state battery.

According to an embodiment of the present disclosure, the electrolyte membrane may be a film-shaped electrolyte membrane including a solid electrolyte. Meanwhile, if necessary, the electrolyte membrane may further include a binder ingredient as an adhesive polymer.

The solid electrolyte is not limited to any particular ingredient, and may include a polymeric solid electrolyte, an inorganic solid electrolyte or a mixture thereof. For example, the inorganic solid electrolyte may include a crystalline solid electrolyte, an amorphous solid electrolyte, a vitreous ceramic solid electrolyte, or a mixture of two or more of them. In addition, the inorganic solid electrolyte may include a sulfide-based solid electrolyte, an oxide-based solid electrolyte or a mixture thereof.

According to an embodiment of the present disclosure, particular examples of the polymeric solid electrolyte may include polyethylene derivatives, polyethylene oxide derivatives, polypropylene oxide derivatives, phosphate polymer, polyagitation lysine, polyester sulfide, polyvinyl alcohol, polyvinylidene fluoride, other polymers containing an ionically dissociable group, or a mixture of two or more of them.

According to an embodiment of the present disclosure, the solid electrolyte may include a sulfide-based solid electrolyte containing sulfur. The sulfide-based solid electrolyte is not particularly limited, and any known sulfide-based material used in the field of batteries may be used. The sulfide-based material may be commercially available or may be prepared through a crystallization process of an amorphous sulfide-based material. For example, the sulfide-based solid electrolyte may include a crystalline sulfide-based solid electrolyte, an amorphous sulfide-based solid electrolyte, or a mixture of two or more of them. Particular examples of composite compounds that may be used herein include sulfur-halogen compounds, sulfur-germanium compounds, sulfur-silicon compounds, or the like, and particularly, may include sulfides, such as SiS₂, GeS₂, Be₂S₃, or the like. In addition, the solid electrolyte may include the above-listed examples to which Li₃PO₄, halogen, halogen compound or a mixture thereof is added. Preferably, the sulfide-based solid electrolyte may include those capable of realizing a lithium ion conductivity of 10⁻⁴ S/cm or more.

Typically, the sulfide-based solid electrolyte may include Li₆PS₅Cl(LPSCl), thio-LISICON(Li_{3.25}Ge_{0.25}P_{0.75}S₄), Li₂S-P₂S₅-LiCl, Li₂S-SiS₂, LiI-Li₂S-SiS₂, LiI-Li₂S-P₂S₅, LiI-Li₂S-P₂O₅, LiI-Li₃PO₄-P₂S₅, Li₂S-P₂S₅, Li₃PS₄, Li₇P₃S₁₁, LiI-Li₂S-B₂S₃, Li₃PO₄-Li₂S-SiS₂, LiPO₄-Li₂S-SiS, Li₁₀GeP₂Si₂, Li_{9.54}S_{1.74}P_{1.44}S_{11.7}C_{10.3}, Li₇P₃S₁₁, or two or more of them, but is not limited thereto.

According to another embodiment of the present disclosure, the solid electrolyte may include Li₃N, LISICON (Li₍₃₊ₓ₎GeₓV₍₁₋ₓ₎O₄, 0 < x < 1), LIPON (Li₃PO₄₋ₓNₓ), Thio-LISICON (Li_{3.25}Ge_{0.25}P_{0.75}S₄), Li₂O-Al₂O₃-TiO₂-P₂O₅ (LATP), or two or more of them, but is not limited thereto.

The binder ingredient is used for binding the solid electrolyte. Non-limiting examples of the binder ingredient may include, but are not limited to: vinylidene fluoride homopolymer (PVDF), poly(vinylidene fluoride-co-hexafluoropropylene (PVDF-HFP), poly(vinylidene fluoride-co-chlorotrifluoroethylene (PVDF-CTFE), poly(vinylidene fluoride-co-tetrafluoroethylene (PVDF-TFE), poly(vinylidene fluoride-co-trichloroethylene (PVDF-TCE), acrylic polymer, styrene-butadiene copolymer, poly(acrylic acid), poly(methylmethacrylate), poly(butyl acrylate), poly(acrylonitrile), poly(vinylpyrrolidone), poly(vinyl alcohol), poly(vinyl acetate), poly(ethylene-co-vinyl acetate), poly(ethylene oxide), poly(arylate), cellulose acetate, cellulose acetate butyrate, cellulose acetate propionate, cyanoethyl pullulan, cyanoethyl polyvinylalcohol, cyanoethyl cellulose, cyanoethyl sucrose, pullulan, carboxymethyl cellulose, or two or more of them.

According to the present disclosure, the electrode portion includes: a current collector; and an active material layer disposed on at least one surface of the current collector. For example, the active material layer may include an electrode active material and a binder for binding the electrode active material and may optionally further include a conductive material.

The current collector functions as a path through which electrons are transferred from the outside or electrons received from the active material are released to the outside so that electrochemical reactions may occur in the active material inside of the electrode portion. Any conventional current collector known to those skilled in the art may be selected suitably with no particular limitation, depending on the particular type of an electrochemical device to which the electrode composite membrane is applied.

The active material is a material participating in the electrode reactions of a battery and may be a positive electrode material or a negative electrode material depending on the type of an electrode. Any conventional positive electrode active material or negative electrode active material known to those skilled in the art may be selected suitably with no particular limitation, depending on the particular type of an electrochemical device to which the electrode composite membrane is applied.

The binder contained in the active material layer is used for binding the active material. Any conventional binder known to those skilled in the art may be selected suitably with no particular limitation, depending on the particular type of an electrochemical device to which the electrode composite membrane is applied.

Any conventional conductive material known to those skilled in the art may be selected suitably with no particular limitation, as long as it has conductivity while not causing any chemical change in the electrode portion.

In another aspect of the present disclosure, there is provided an electrochemical device.

The electrochemical device includes: an electrode assembly including a positive electrode and a negative electrode; and a casing configured to receive the electrode assembly, wherein at least one of the positive electrode and the negative electrode is the above-described electrode composite membrane.

The casing may be any battery casing used conventionally as a battery casing and is not particularly limited to the outer shape depending on the use of a battery. For example, the casing may be a cylindrical casing using a can, a prismatic casing, a pouch-like casing or a coin-like casing.

According to an embodiment of the present disclosure, the electrochemical device may be a lithium secondary battery. Particularly, once the above-described electrode composite membrane is finished, a lithium secondary battery may be obtained by introducing the electrode composite membrane to a casing by using a conventional method and injecting an electrolyte thereto, followed by sealing.

According to an embodiment of the present disclosure, the electrochemical device may be a solid-state battery. In the solid-state battery, the constitution other than the electrode composite membrane may be selected suitably from those generally known in the art with no particular limitation.

### MODE FOR DISCLOSURE

Hereinafter, the present disclosure will be explained in more detail with reference to Examples. However, the following Examples are for illustrative purposes only, and the scope of the present disclosure is not limited thereto.

### [Manufacture of Electrode Composite Membrane]

### Example 1

First, a film (thickness 100 mm) made of a cellulose nonwoven web and cut into a size of 3 cm x 3 cm was prepared as a support, and a slurry for forming an adhesive portion including a PVDF binder dissolved in N-methyl-2-pyrrolidone (NMP) as a solvent was applied to and dried on one surface of the support to form an adhesive portion having a thickness of 5 µm.

An electrode plate was prepared as follows. An electrode portion (total thickness 100 µm) including a nickel cobalt manganese oxide-based active material, LiNi_{0.8}Co_{0.1}Mn_{0.1}O₂, carbon black as a conductive material, PVDF as a binder and an argyrodite-type solid electrolyte, Li₆PS₅Cl, at a weight ratio of 78:1:1:20 was prepared on aluminum foil (12 µm) having a size of 2 cm x 2 cm. Then, a polypropylene film cut into a size of 3 cm x 3 cm and having a thickness of 50 µm was perforated with the same size (2 cm x 2 cm) of the electrode, and a reinforcing material portion was arranged in such a manner that it might surround the perimeter of the lateral side of the electrode portion. Herein, the reinforcing material portion was disposed in such a manner that the top end of the reinforcing material portion might coincide with that of the electrode portion, referring to FIG. 2b. In this manner, the resultant electrode plate had the same size (3 cm x 3 cm) as the support.

An electrolyte membrane was prepared by coating a slurry including a sulfide-based solid electrolyte and a binder dissolved at a ratio of 95:5 in anisole as a solvent on a release film, followed by drying.

The electrode plate and the electrolyte membrane were laminated successively on the adhesive portion in such a manner that the current collector in the electrode plate might face the adhesive portion, and then the resultant laminate product was pressurized under a pressure condition of 500 MPa in an isostatic pressing mode to obtain an electrode composite membrane having a structure of [support/adhesive portion/electrode plate (reinforcing material portion-electrode portion)/electrolyte membrane].

### Comparative Example 1

Only the electrode portion having no reinforcing material portion was used as an electrode plate, the electrode portion and the electrolyte membrane were laminated without using the support and the adhesive portion, and then the resultant laminate product was pressurized in the same manner as Example 1 to obtain an electrode composite membrane having a structure of [electrode portion/electrolyte membrane].

### Comparative Example 2

Only the electrode portion having no reinforcing material portion was used as an electrode plate, the support, the electrode portion and the electrolyte membrane were laminated without using the adhesive portion, and then the resultant laminate product was pressurized in the same manner as Example 1 to obtain an electrode composite membrane having a structure of [support/electrode portion/electrolyte membrane].

### Comparative Example 3

An electrode composite membrane having a structure of [electrode plate (reinforcing material portion-electrode portion)/electrolyte membrane] was prepared in the same manner as Example 1, except that the support and the adhesive portion were not provided.

### Comparative Example 4

An electrode composite membrane having a structure of [support/electrode plate (reinforcing material portion-electrode portion)/electrolyte membrane] was prepared in the same manner as Example 1, except that the adhesive portion was not provided.

### [Evaluation of Adhesion to Electrolyte Membrane]

It was observed by the naked eyes how much the electrolyte membrane according to each of Example 1 and Comparative Examples 1-4 is separated from the electrode plate to evaluate the adhesion.

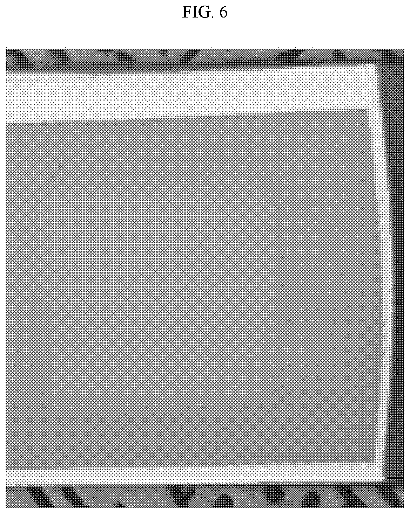

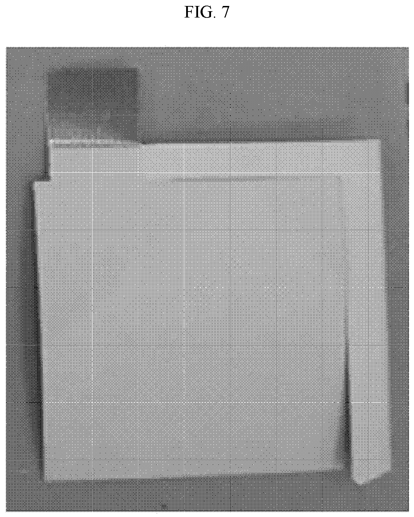

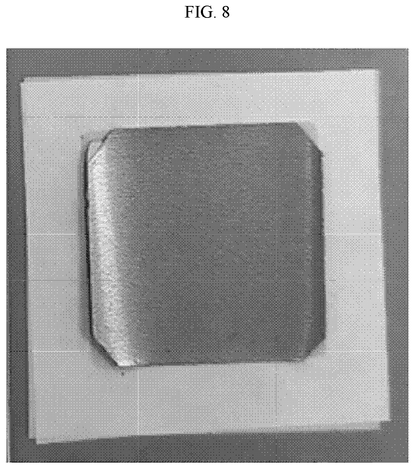

FIG. 6 is a photographic image illustrating the appearance of the electrode composite membrane according to Example 1, FIG. 7 is a photographic image illustrating the appearance of the electrode composite membrane according to Comparative Example 1, and FIG. 8 is a photographic image illustrating the appearance of the electrode composite membrane according to Comparative Example 3.

As shown in FIG. 6, in the case of Example 1, the electrolyte membrane and the electrode plate are not separated from each other but adhered to each other over the whole area. On the contrary, as shown in FIG. 7, in the case of Comparative Example 1, the electrolyte membrane is totally separated from the electrode plate provided with the electrode portion alone. In addition, as shown in FIG. 8, in the case of Comparative Example 3, the electrolyte membrane is still separated from the electrode plate at the external perimeter portion thereof, even though the electrode plate is provided with the reinforcing material portion, due to the absence of the support.

In the case of each of Comparative Examples 2 and 4, although the photographic image of the appearance is not shown, it can be seen that the electrode plate is not adhered to the support, and a curling phenomenon still occurs at the external perimeter of the electrode plate after pressing, resulting in separation of the electrolyte membrane.

The present disclosure has been described in detail. However, it should be understood that various changes and modifications within the scope of the disclosure will become apparent to those skilled in the art from this detailed description.

### [Description of Drawing Numerals]

1: Electrode composite membrane
10: Electrode plate
101: Electrode portion
102: Reinforcing material portion
20: Electrolyte membrane
30: Support
40: Adhesive portion

## Claims

1. An electrode composite membrane comprising:
an electrode plate having an electrode portion and a reinforcing material portion;
an electrolyte membrane disposed on one surface of the electrode plate;
a support disposed on the other surface of the electrode plate; and
an adhesive portion disposed at least partially at the portion where the electrode plate faces the support,
wherein the electrode portion comprises a current collector and an active material layer disposed on at least one surface of the current collector,
the electrolyte membrane is in close contact with the electrode portion and the reinforcing material portion with no spacing, while being in contact with at least a part of the active material layer, and
the reinforcing material portion has a thickness equal to or smaller than the thickness of the electrode portion, is disposed in such a manner that it may totally or at least partially surround the perimeter of the lateral side of the electrode portion, and is in contact with the lateral side of the electrode portion with no spacing.

2. The electrode composite membrane according to claim 1, wherein the electrolyte membrane is disposed in such a manner that it may totally cover one surface of the electrode plate.

3. The electrode composite membrane according to claim 1, wherein the reinforcing material portion has a thickness smaller than the thickness of the electrode portion and is disposed in such a manner that it may totally surround the perimeter of the lateral side of the electrode portion.

4. The electrode composite membrane according to claim 1, wherein the reinforcing material portion is disposed in such a manner that it may have a predetermined interval in the perimeter of the lateral side of the electrode portion and may surround only a part of the perimeter of the lateral side of the electrode portion, and the perimeter in which the reinforcing material portion is disposed corresponds to 50% or more based on the total perimeter of the lateral side of the electrode portion.

5. The electrode composite membrane according to claim 1, wherein the support is disposed in such a manner that it may totally cover one surface of the electrode plate.

6. The electrode composite membrane according to claim 1, wherein the adhesive portion is disposed totally at the portion where the electrode plate faces the support.

7. The electrode composite membrane according to claim 1, wherein the reinforcing material portion comprises a polyolefin-based polymer.

8. The electrode composite membrane according to claim 1, wherein the adhesive portion comprises a fluorine-based polymer, an acryl-based polymer, a urethane-based polymer, an epoxy-based polymer, an imide-based polymer, or a mixture of two or more of them.

9. The electrode composite membrane according to claim 1, wherein the electrolyte membrane is a film-shaped electrolyte membrane comprising a solid electrolyte.

10. An electrochemical device comprising:
an electrode assembly comprising a positive electrode and a negative electrode; and
a casing configured to receive the electrode assembly,
wherein at least one of the positive electrode and the negative electrode is the electrode composite membrane as defined in any one of claims 1 to 9.

11. The electrochemical device according to claim 10, which is a lithium secondary battery.

12. The electrochemical device according to claim 10, which is a solid-state battery.
